# EUROPÄISCHE PATENTSCHRIFT

(11) **EP 3 104 128 B1**
(45) Veröffentlichungstag und Bekanntmachung des Hinweises auf die Patenterteilung: **16.08.2017**
(21) Anmeldenummer: 16171992.7
(22) Anmeldetag: 30.05.2016
(51) Int. Cl.: G01D 5/241

(54) **VORRICHTUNG ZUR KONTAKTLOSEN ÜBERTRAGUNG VON DATEN UND ZUR ERMITTLUNG EINER WINKELÄNDERUNG ZWISCHEN ZWEI SICH RELATIV ZUEINANDER BEWEGENDEN GEGENSTÄNDEN**
DEVICE FOR THE CONTACTLESS TRANSMISSION OF DATA AND FOR DETERMINING ONE CHANGE IN AN ANGLE BETWEEN TWO OBJECTS MOVING RELATIVE TO EACH OTHER
DISPOSITIF DE TRANSMISSION SANS CONTACT DE DONNEES ET DESTINE A DETERMINER LA MODIFICATION ANGULAIRE ENTRE DEUX OBJETS SE DEPLAÇANT L'UN PAR RAPPORT A L'AUTRE

(30) Priorität: 12.06.2015 DE 102015109418
(43) Veröffentlichungstag der Anmeldung: 14.12.2016
(73) Patentinhaber: SICK AG, 79183 Waldkirch/Breisgau (DE)
(72) Erfinder: Schmitz, Stephan, 79108 Freiburg (DE); Kufner, Martin, 79215 Elzach (DE)
(74) Vertreter: Manitz Finsterwald Patentanwälte PartmbB

(56) Entgegenhaltungen:
- EP-A1- 0 435 429
- EP-A1- 0 520 535
- EP-A2- 0 248 165
- DE-A1- 19 652 935
- DE-A1- 19 859 557
- DE-A1-102009 044 618
- DE-B3-102011 015 589
- DE-B3-102014 101 312
- DE-U1- 9 421 122
- GB-A- 2 015 167

## Beschreibung

Die vorliegende Erfindung betrifft eine Vorrichtung zur kontaktlosen Übertragung von Daten und zur Ermittlung einer Winkeländerung zwischen zwei sich um eine gemeinsame Rotationsachse relativ zueinander bewegenden Gegenständen, wobei an dem ersten Gegenstand ein bevorzugt scheiben- oder ringscheibenförmiger Elektrodenträger vorgesehen ist, der eine erste Elektrode umfasst, und an dem zweiten Gegenstand ein bevorzugt scheiben- oder ringscheibenförmiger Elektrodenträger vorgesehen ist, der eine zweite Elektrode umfasst, wobei sich der erste und der zweite Elektrodenträger bezüglich der Rotationsachse axial beabstandet gegenüberstehen und die erste und die zweite Elektrode derart angeordnet sind, dass eine Datenübertragung durch elektrische Kopplung zwischen der ersten und der zweiten Elektrode möglich ist. EP0435429A1 offenbart einen kapazitiven Drehwinkelgeber. Bei sich relativ zueinander drehenden Gegenständen ist es oftmals notwendig, dass Daten zwischen den zwei zueinander bewegbaren Gegenständen übertragen werden. So können Eingaben an einem Lenkrad, wie beispielsweise das Drücken der Hupe oder sonstige Eingaben zur Änderung von Fahrzeugfunktionen, zwischen dem drehbaren Lenkrad und einer Bordelektronik des Kraftfahrzeugs übermittelt werden. DE19652935A1 offenbart einen induktiven Resolver mit Übertragung zusätzlicher Informationen. Eine weitere Anwendung findet sich z.B. bei entsprechenden Ausgestaltungen von Laserscannern zur Überwachung einer Umgebung. Datensignale werden hier beispielsweise zwischen einem sich drehenden Sensorkopf und einer feststehenden Auswerte- und Versorgungseinheit ausgetauscht.

Oftmals kann es erwünscht sein, dass neben der Datenübertragung eine Ermittlung der relativen Drehposition des ersten Gegenstands zu dem zweiten Gegenstand möglich ist. Eine solche Ermittlung der Drehposition erfolgt üblicherweise mittels eines Encoders, der beispielsweise auf einem optischen oder magnetischen Prinzip basiert. Encoder benötigen allerdings zusätzliche Komponenten und erhöhen damit die Komplexität und den Herstellungsaufwand für eine solche Vorrichtung.

Es ist die der Erfindung zugrundliegende Aufgabe, eine Vorrichtung anzugeben, die die kontaktlose Übertragung von Daten zwischen zwei sich relativ zueinander um eine Rotationsachse bewegenden Gegenständen gestattet und zugleich eine wenig aufwändige Ermittlung einer Winkeländerung zwischen den zwei Gegenständen ermöglicht.

Diese Aufgabe wird mit einer Vorrichtung zur kontaktlosen Übertragung von Daten und zur Ermittlung einer Winkeländerung mit den Merkmalen des Anspruchs 1 gelöst. Unteransprüche sind auf bevorzugte Ausgestaltungen gerichtet. Ein Verfahren zur kontaktlosen Übertragung von Daten und zur Ermittlung einer Winkeländerung ist in Anspruch 10 angegeben. Ein Laserscanner mit einer erfindungsgemäßen Vorrichtung zur Übertragung von Daten und zur Ermittlung einer Winkeländerung ist Gegenstand des Anspruchs 11.

Die erfindungsgemäße Vorrichtung zeichnet sich unter anderem dadurch aus, dass die Elektrodenträger derart ausgebildet sind, dass sich die Stärke der elektrischen Kopplung entlang der umfangsmäßigen Erstreckung der ersten und der zweiten Elektrode verändert, wobei eine Steuereinheit vorgesehen ist, die ausgebildet ist, ein Signal von der ersten Elektrode an die zweite Elektrode zu übertragen, welches Nutzdaten enthält, und eine Auswerteeinheit vorgesehen ist, die ausgebildet ist, die Nutzdaten zu empfangen und eine Signalstärke des empfangenen Signals auszuwerten, um eine Winkeländerung zwischen dem ersten und dem zweiten Gegenstand zu ermitteln.

Der Begriff der "umfangsmäßigen Erstreckung" der Elektroden ist hier als Erstreckung entlang einer Linie um die Achse der relativen Drehung der beiden Gegenstände zu verstehen.

Bei den Nutzdaten kann es sich beispielsweise um Steuerbefehle, Mess- oder Sensordaten und dergleichen handeln.

Der Erfindung liegt die Erkenntnis zugrunde, dass mittels einer unterschiedlich starken elektrischen Kopplung entlang der Erstreckung der ersten und der zweiten Elektrode das zwischen den Elektroden übertragene Signal bei einer Rotation der Gegenstände in seiner Stärke schwankt. Anhand der Schwankung bzw. Veränderung der Signalstärke kann somit auf eine Winkeländerung rückgeschlossen werden. Dazu muss die Kopplungsstärke in zumindest einer Relativposition, d.h. in zumindest einer vorbestimmten Drehposition, verändert sein.

Insofern wird für die Veränderung der Kopplungsstärke in Kauf genommen, dass die Kopplungsstärke z.B. abschnittsweise bewusst verschlechtert wird, um eine Schwankung in der Signalstärke des Signals bei der Rotation der Gegenstände zu erreichen.

Von besonderem Vorteil ist dabei, dass für die Ermittlung der Winkeländerung auf die ohnehin zur Datenübertragung benötigten Elektrodenträger zurückgegriffen wird. Erfindungsgemäß sind folglich keine zusätzlichen Komponenten zur Winkelmessung erforderlich. Die erfindungsgemäße Vorrichtung ist in der Folge besonders einfach und damit wirtschaftlich herstellbar.

Der Begriff der "elektrischen Kopplung" zwischen dem ersten und dem zweiten elektrischen Leiter ist als kontaktlose kapazitive Kopplung zu verstehen.

Eine bevorzugte Ausgestaltung der Erfindung sieht vor, dass der erste Elektrodenträger in Umfangsrichtung abwechselnde Abschnitte mit verbreiteter und anschließend verjüngter erster Elektrode aufweist und der zweite Elektrodenträger in Umfangsrichtung abwechselnde Abschnitte mit verbreiteter und anschließend verjüngter zweiter Elektrode aufweist. Bevorzugt können die Elektroden als flächige Elektroden auf den Elektrodenträgern aufgebracht sein. Die Begriffe "verbreitert" und "verjüngt" können sich jeweils auf die in der axialen Richtung sichtbare Fläche der Elektroden beziehen.

Der Elektrodenträger selbst kann zudem ebenfalls in Umfangsrichtung abwechselnd verbreitert und anschließend verjüngt ausgebildet sein. Die Elektroden können die Elektrodenträger also jeweils vollständig bedecken.

Beispielsweise können die Elektroden (und damit auch die Elektrodenträger) eine ebene kreisringförmige Struktur umfassen, die in periodischen Abständen nach außen ragende rechteckige Zähne umfasst, wobei die Zähne dazu dienen, eine unterschiedliche Kopplungsstärke zu erreichen.

Alternativ kann eine Kopplungsstärkenmodulation, das heißt, eine unterschiedlich starke kapazitive Kopplung, auch durch das Aufbringen verschiedener Dielektrika, das Vorsehen von zusätzlichen Abschirmungen, die Verwendung einer dreidimensionalen Form mit Abschnitten mit geringerem Abstand zwischen den Elektroden und/oder durch die Benutzung einer Polygonform für die Elektroden erreicht werden.

Besonders bevorzugt weisen die Abschnitte mit verbreiterter Elektrode und mit verjüngter Elektrode in Umfangsrichtung der Elektrodenträger jeweils eine gleiche Länge auf. Allgemein gesagt kann die Kopplungsstärke in Umfangsrichtung gesehen periodisch schwanken, wodurch das empfangene Signal eine etwa sinusförmige Amplitudenmodulation erhalten kann. Dies kann z.B. auch durch die Verwendung von in gleichen Abständen angeordneten Dielektrika, Abschirmungen und dergleichen erreicht werden.

Gemäß einer vorteilhaften Ausführungsform weisen der erste und der zweite Elektrodenträger jeweils einen Nullreferenzabschnitt auf, der eine verbreiterte oder eine verjüngte Elektrode aufweist und dessen Länge in Umfangsrichtung größer als die Länge eines Abschnitts mit verbreiterter Elektrode und die Länge eines Abschnitts mit verjüngter Elektrode ist. Insbesondere ist die Länge des Nullreferenzabschnitts in Umfangsrichtung gesehen ein Vielfaches der Länge der Abschnitte mit verbreiterter und/oder verjüngter Elektrode.

Generell kann der Nullreferenzabschnitt durch einen Abschnitt mit einem Maximum oder einem Minimum der elektrischen Kopplung gebildet sein. Neben der Verwendung eines verlängerten Abschnitts mit verbreiterter oder verjüngter Elektrode kann der Nullreferenzabschnitt auch z.B. durch die bereits erwähnten Dielektrika, Abschirmungen und/oder die geometrische Form der Elektroden bzw. der Elektrodenträger erzeugt werden.

Durch den Nullreferenzabschnitt kann beispielsweise ein bezüglich der abwechselnden Abschnitte "großer" bzw. "langer" Bereich mit einer starken elektrischen Kopplung entstehen, wodurch die Signalstärke des empfangenen Signals von einer zusätzlichen Amplitudenmodulation überlagert wird. Mittels der zusätzlichen Amplitudenmodulation kann ein Nullpunkt definiert werden, der es ermöglicht, mit der Vorrichtung nicht nur eine relative Winkelposition sondern zusätzlich auch eine absolute Winkelposition der Gegenstände zueinander zu ermitteln. Bevorzugt kann die Auswerteeinheit mehrere Umdrehungen der Gegenstände verarbeiten, um den Nullpunkt exakter zu bestimmen. Zusätzlich oder alternativ kann das empfangene Signal mit einem Hochpass gefiltert werden, um einen Gleichtaktanteil zu entfernen. Zu diesem Zweck kann die Auswerteeinheit einen Hochpass umfassen. Eine bei der Filterung entstehende Wechselspannung weist Nulldurchgänge auf, deren Abstand einem definierten Drehwinkel bei der Drehung der Gegenstände entspricht.

Gemäß einer besonders bevorzugten Ausgestaltung ist die Steuereinheit ausgebildet, das Signal in einer Weise zu erzeugen, dass es eine erste Frequenz und eine zweite Frequenz umfasst, wobei die Steuereinheit eingerichtet ist, die Nutzdaten mittels der zweiten Frequenz zu übertragen. Dies bedeutet, dass das zwischen der ersten und der zweiten Elektrode übertragene Signal zwei verschiedene Frequenzen umfassen kann, wobei die erste Frequenz für die Winkelmessung und die zweite Frequenz zur Übertragung der Nutzdaten verwendet werden kann. Auf diese Weise interferiert eine Übertragung der Nutzdaten nicht mit der Ermittlung der Winkeländerung, wodurch die Winkeländerung noch genauer ermittelt werden kann.

Bevorzugt weist die erste Frequenz keine Amplitudenmodulation auf und/oder ist die zweite Frequenz amplitudenmoduliert. Die Übertragung der Nutzdaten kann also mittels einer Amplitudenmodulation erfolgen. Für die Ermittlung der Winkeländerung wird hingegen keine von vornherein eingeprägte Amplitudenmodulation verwendet, da aufgrund der in Umfangsrichtung verschieden starken elektrischen Kopplung bei der Drehung der Gegenstände eine Amplitudenmodulation eintritt.

Gemäß einer weiteren vorteilhaften Ausführungsform ist die erste Frequenz kleiner als die zweite Frequenz, wobei die erste Frequenz bevorzugt kleiner oder gleich 75 MHz und die zweite Frequenz bevorzugt größer oder gleich 300 MHz ist. Durch eine derartige Wahl der Frequenzen können die erste und die zweite Frequenz auf einfache Weise mittels eines Filters voneinander getrennt werden. Zudem nimmt die Stärke der elektrischen Kopplung üblicherweise mit der Frequenz zu, wodurch zugleich eine robuste Datenübertragung und die Ermittlung der Winkeländerung ermöglicht werden. Für die Datenübertragung kann ein Bandbreite von größer oder gleich 30 MHz verwendet werden.

Gemäß einer weiteren vorteilhaften Ausführungsform ist koaxial und drehfest zu dem ersten Elektrodenträger eine erste Spule vorgesehen und ist koaxial und drehfest zu dem zweiten Elektrodenträger eine zweite Spule vorgesehen, die der ersten Spule derart bezüglich der Rotationsachse axial beabstandet gegenüber steht, dass eine Energieübertragung durch induktive Kopplung zwischen den zwei Spulen möglich ist. Neben der Übertragung von Daten ist somit auch die Übertragung von Energie zwischen den Gegenständen möglich, wodurch beispielsweise die für den Betrieb eines Sensorkopfes eines Laserscanners notwendige Energie mittels der Vorrichtung übertragbar ist.

Bevorzugt ist in einem radialen Bereich zwischen der ersten Spule und der ersten Elektrode und/oder zwischen der zweiten Spule und der zweiten Elektrode jeweils koaxial zwischen Spule und Elektrode eine Anordnung aus leitfähigem Material zur elektrischen Abschirmung vorgesehen. Es ist damit auf effektive Weise möglich, trotz einer kompakten Anordnung der Vorrichtung Störungen der Datenübertragung über die Elektroden durch die benachbart angeordnete induktive Energieübertragung mittels der Spulen wirksam einzuschränken. Trotzdem ist eine kleine Bauform möglich, weil die induktive Energieübertragung und die elektrische Datenübertragung räumlich nicht weit auseinander liegen müssen, um die ansonsten stattfindende elektromagnetische Störung zu verhindern.

Eine einfache und leicht handzuhabende Ausgestaltung sieht vor, dass die Spule bzw. die Spulen konzentrisch zu der Drehachse der Relativbewegung der Gegenstände sind. Vorteilhafter Weise können auch die Elektroden zur Datenübertragung kreisförmig oder teilkreisförmig ausgestaltet sein, wobei die Kreise oder Teilkreise konzentrisch zur Drehachse der Relativbewegung sind.

Grundsätzlich ist es möglich, dass die Spulen selbsttragende Strukturen sind. Besonders vorteilhaft ist es jedoch, wenn der erste Gegenstand einen ersten scheiben- oder ringscheibenförmigen Spulenträger umfasst, der die erste Spule trägt, und der zweite Gegenstand einen zweiten scheiben- oder ringscheibenförmigen Spulenträger umfasst, der die zweite Spule trägt. Derartige scheiben- oder ringscheibenförmige Spulenträger sind einfach herzustellen und können z.B. durch lithographische Prozesse prozessiert werden, um die Spulen darauf aufzubringen.

Außerdem sind bei einer solchen Ausgestaltung nicht nur die Elektrodenträger scheiben- oder ringscheibenförmig ausgestaltet und stehen sich zur Datenübertragung axial beabstandet gegenüber, sondern auch die Spulen auf dem scheiben- oder ringscheibenförmig ausgestalteten Spulenträger stehen sich axial beabstandet gegenüber, um die induktive Kopplung zur Energieübertragung zu ermöglichen. Auf diese Weise ist ein sehr kompakter und einfacher Aufbau gewährleistet. Besonders einfach und vorteilhaft ist es dabei, wenn die Spulenträger direkt als Leiterkarten ausgestaltet sind, auf denen die jeweiligen Spulenwindungen zur Energieübertragung aufgebracht sind. Ebenso können die Elektrodenträger Leiterkarten umfassen, auf die die Elektroden zur Datenübertragung aufgebracht sind. Die metallischen Spulenwindungen zur Energieübertragung bzw. die Elektroden zur Datenübertragung lassen sich auf Leiterkarten sehr einfach durch an sich bekannte lithographische Prozesse (z.B. Aufdampfen oder Ätzen) herstellen.

Auf diese Weise ist die Geometrie der Spulenwindungen bzw. der Elektroden auf einfache Weise festlegbar und die Leiterkarten können selbst als Träger für die Spulenwindungen bzw. die Elektroden dienen.

Besonders einfach und in der Herstellung kostengünstig ist es, wenn am ersten Gegenstand der erste Spulenträger und der erste Elektrodenträger einstückig vorgesehen sind (also durch ein Teil gebildet werden kann) und/oder am zweiten Gegenstand der zweite Spulenträger und der zweite Elektrodenträger einstückig sind. Auf diese Weise muss jeweils nur eine Trägerstruktur, z.B. eine Leiterkarte pro Gegenstand, vorgesehen sein. Auf dieser Leiterkarte kann dann jeweils die Spule zur Energieübertragung und die Elektrode zur Datenübertragung vorgesehen sein und bei der Herstellung gleichzeitig prozessiert werden.

Bei Ausgestaltungen, bei der die Spulenträger bzw. die Elektrodenträger als Leiterkarten vorgesehen sind, ist es zudem von besonderem Vorteil, dass es auf platzsparende Weise möglich ist, weitere - insbesondere elektronische - Komponenten und Verbindungsleitungen vorzusehen.

Bei erfindungsgemäßen Ausgestaltungen, bei der der erste Gegenstand eine erste scheiben- oder ringscheibenförmigen Spulenträger umfasst, der die erste Spule trägt, und der zweite Gegenstand einen zweiten scheiben- oder ringscheibenförmigen Spulenträger umfasst, der die zweite Spule trägt, sind die Spulen vorteilhafterweise flächig ausgestaltet. Das heißt, sie umfassen Spulenwindungen, die auf einer Fläche des jeweiligen scheiben- oder ringscheibenförmigen Spulenträgers nebeneinander angeordnet sind. Grundsätzlich ist es möglich, dass auf der zweiten Fläche des jeweiligen Spulenträgers jeweils eine weitere flächige Spule vorgesehen ist, die die induktive Kopplung z.B. über eine Ferritstruktur verstärkt.

Bevorzugt ist es jedoch, wenn sich die Spulenwindungen der ersten Spule (am ersten Gegenstand) und die Spulenwindungen der zweiten Spule (am zweiten Gegenstand) auf den gegenüberliegenden Seiten der beiden Spulenträger gegenüber stehen, wie es auch weiter unten unter Bezug auf die in den Figuren gezeigte Ausgestaltung beschrieben ist.

Eine einfache Realisierung der Abschirmung zwischen den energieübertragenden Spulen und den datenübertragenden Elektroden bei einer Ausführungsform mit Leiterkarten als Trägerstrukturen sieht vor, dass zwischen den Spulenwindungen und dem elektrischen Leiter Bohrungen in der jeweiligen Leiterkarte vorgesehen sind, in denen sich leitfähiges Material befindet. Dazu kann insbesondere vorgesehen sein, dass die Innenumfänge der Bohrungen in den Leiterkarten mit metallischem Material beschichtet sind, um eine Abschirmung zu bewirken, die auf einfache Weise realisiert werden kann, ohne die Trägerstruktur zu sehr zu schwächen.

Besonders vorteilhaft ist es, wenn die Vorrichtung eine erste Gehäuseschale aus leitfähigem Material und/oder eine zweite Gehäuseschale aus leitfähigem Material aufweist, wobei die erste Gehäuseschale drehfest mit dem ersten Gegenstand ist und die zweite Gehäuseschale drehfest mit dem zweiten Gegenstand. Die Gehäuseschalen aus leitfähigem Material dienen zur elektrischen Abschirmung des Systems nach außen und verhindern auf wirksame Weise Störungen durch externe Einflüsse.

Außerdem bieten derartig angeordnete und ausgestaltete Gehäuseschalen eine Verbindung zu einer virtuellen Masse, indem sie eine kapazitive Kopplung zwischen der realen Masse und der virtuellen Masse bewirken.

Besonders vorteilhaft ist es, wenn die erste Gehäuseschale dabei elektrisch mit der elektrischen Anordnung zwischen den Spulenwindungen der ersten Spule und dem ersten elektrischen Leiter verbunden ist und die zweite Gehäuseschale elektrisch mit der elektrischen Anordnung aus leitfähigem Material zur elektrischen Abschirmung zwischen den Spulenwindungen der zweiten Spule und dem zweiten elektrischen Leiter verbunden ist.

Auf diese Weise sind die Abschirmungsanordnungen zwischen den jeweiligen Spulenwindungen und Elektroden elektrisch mit jeweils einer Gehäuseschale verbunden, so dass eine wirksame Abschirmung der Datenübertragung gegenüber jeglichen äußeren Einflüssen und insbesondere auch gegenüber den Einflüssen der zur Energieübertragung verwendeten Spulen vorgesehen ist. Nur diejenige Seite des Elektrodenträgers, die dem Elektrodenträger auf dem anderen sich relativ drehenden Gegenstand direkt gegenübersteht, ist nicht von der Abschirmung umgeben.

Die Verbindung kann zum Beispiel durch eine leitfähige ringförmige Struktur, z.B. leitfähigem Schaumstoff gebildet sein, der koaxial zur Drehachse zwischen Spule und Elektrode angeordnet ist.

Besonders wirksam ist die Abschirmung durch die Gehäuseschalen, wenn die beide Gehäuseschalen an ihrem radial äußeren Bereich jeweils einen abgewinkelten Bereich umfassen, wobei die abgewinkelten Bereiche der beiden Gehäuseschalen radial beabstandet zueinander nebeneinander stehen. Je größer der überlappende Bereich der Abschirmung (insbesondere der Gehäuseschalen) ist und desto geringer der Abstand der überlappenden Bereiche ist, umso besser ist die abschirmende Wirkung.

Weiterer Gegenstand der Erfindung ist ein Verfahren zur kontaktlosen Übertragung von Daten und zur Ermittlung einer Winkeländerung zwischen zwei sich um eine gemeinsame Rotationsachse relativ zueinander bewegenden Gegenständen, wobei an dem ersten Gegenstand ein bevorzugt scheiben- oder ringscheibenförmiger Elektrodenträger vorgesehen ist, der eine erste Elektrode umfasst, und an dem zweiten Gegenstand ein bevorzugt scheiben- oder ringscheibenförmiger Elektrodenträger vorgesehen ist, der eine zweite Elektrode umfasst, wobei sich der erste und der zweite Elektrodenträger bezüglich der Rotationsachse axial beabstandet gegenüberstehen und die erste und die zweite Elektrode derart angeordnet sind, dass eine Datenübertragung durch elektrische Kopplung zwischen der ersten und der zweiten Elektrode möglich ist, wobei die Elektrodenträger derart ausgebildet sind, dass die Stärke der elektrischen Kopplung entlang der umfangsmäßigen Erstreckung der ersten und der zweiten Elektrode schwankt. Gemäß dem Verfahren wird von der ersten Elektrode an die zweite Elektrode ein Signal übertragen, welches Nutzdaten enthält, und wird eine Signalstärke des empfangenen Signals ausgewertet, um eine Winkeländerung zwischen dem ersten und dem zweiten Gegenstand zu ermitteln.

Die zu der erfindungsgemäßen Vorrichtung getroffenen Aussagen, insbesondere hinsichtlich Vorteilen und bevorzugten Ausführungsformen gelten für das erfindungsgemäße Verfahren entsprechend.

Ferner betrifft die Erfindung einen Laserscanner mit einer Vorrichtung zur kontaktlosen Übertragung von Daten und zur Ermittlung einer Winkeländerung der voranstehend erläuterten Art, wobei der Laserscanner einen, relativ um eine Rotationsachse drehbaren, den ersten Gegenstand bildenden Sensorkopf und eine den zweiten Gegenstand bildende Versorgungseinheit umfasst. Bei der Verwendung in einem Laserscanner ist die erfindungsgemäße Vorrichtung besonders vorteilhaft einsetzbar, da eine Winkelposition des Sensorkopfes relativ zu der Versorgungseinheit jederzeit bekannt sein muss, wobei der Laserscanner durch den Entfall eines zusätzlichen Winkelencoders besonders klein und kompakt ausgebildet werden kann.

Bevorzugte Ausführungsformen ergeben sich aus den Unteransprüchen, den beiliegenden Figuren und/oder den im Folgenden beschriebenen Ausführungsbeispielen.

Nachfolgend wird die Erfindung rein beispielhaft unter Bezugnahme auf die Zeichnungen beschrieben. Es zeigen:
- Fig. 1: eine Ausführungsform einer erfindungsgemäßen Vorrichtung in schematischer Darstellung im seitlichen Schnitt;
- Fig. 2: eine erste Ausführungsform einer Elektrode in Draufsicht;
- Fig. 3: zwei bezüglich einer Rotationsachse axial beabstandet gegenüberstehende Elektroden einer zweiten Ausführungsform in perspektivischer Darstellung;
- Fig. 4: eine Signalstärke eines empfangenen Signals bei Rotation zweier Elektroden;
- Fig. 5: eine dritte Ausführungsform einer Elektrode mit einem Nullreferenzabschnitt in Draufsicht; und
- Fig. 6: eine Signalstärke eines empfangenen Signals bei Rotation zweier Elektrodenträger, welche jeweils einen Nullreferenzabschnitt aufweisen.

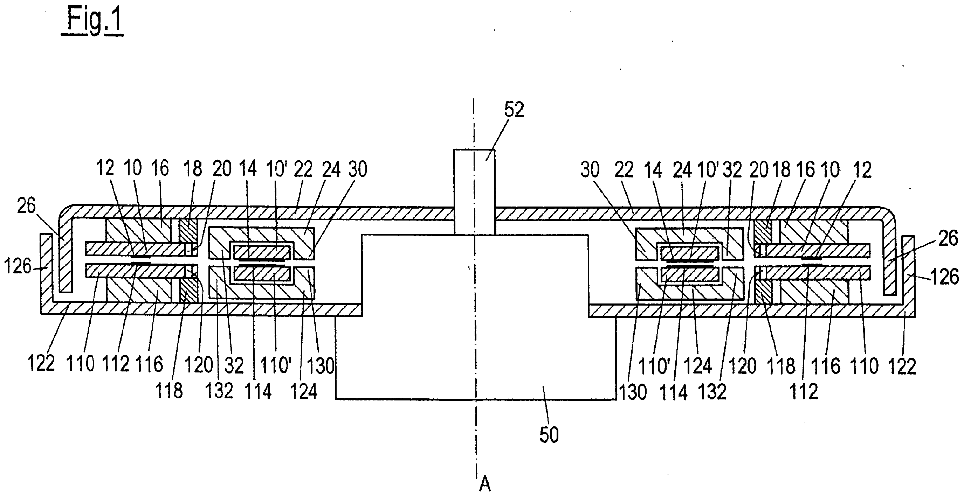

Fig. 1 zeigt eine Ausgestaltung einer erfindungsgemäßen Vorrichtung im seitlichen Schnitt in schematischer Darstellung. Im seitlichen Schnitt sieht man zwei sich gegenüberstehende Leiterkarten 10, 110, die gegeneinander um die Achse A relativ zueinander beweglich sind.

Auf dem radial inneren Bereich 10' der Leiterkarte 10 befindet sich auf derjenigen Seite, die der Leiterkarte 110 gegenübersteht, eine Spule 14 mit Spulenwindungen, die im Wesentlichen konzentrisch zur Drehachse A der Relativbewegung sind. Diese Spulenwindungen sind im Schnitt der Fig. 1 schematisch als nur ein schwarzer Balken an der Unterseite des Leiterkartenabschnitts 10' gezeigt. Die Spulenwindungen werden auf der jeweiligen Leiterkarte durch aufgedampfte oder geätzte Leiterbahnen gebildet. Für die Spule 14 auf der Leiterkarte 10 und die sie bildenden Spulenwindungen wird der einfachen Darstellung halber im vorliegenden Text dieselbe Bezugsziffer 14 verwendet.

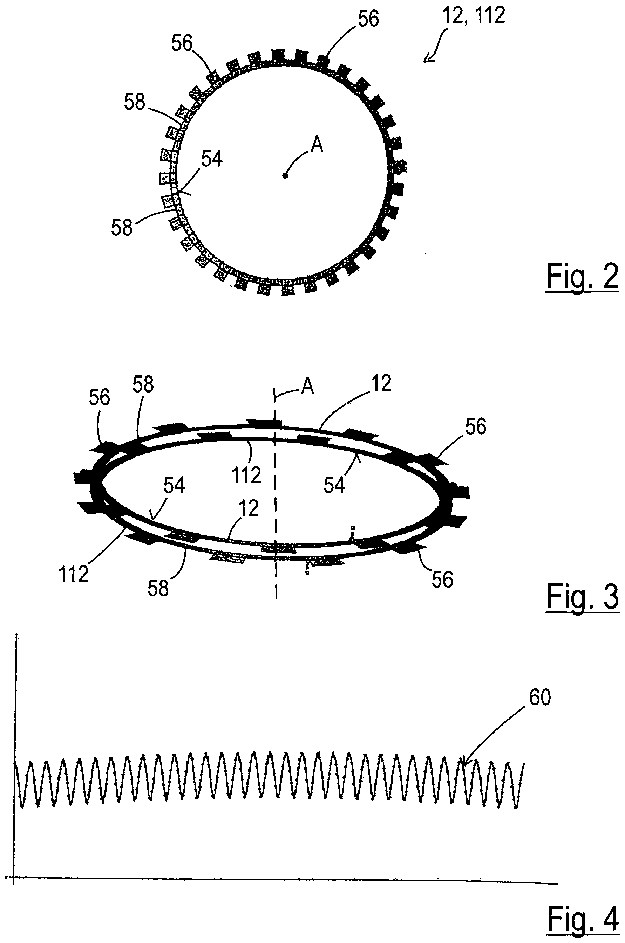

Im äußeren Bereich der Leiterkarte 10 befindet sich auf derjenigen Seite, die der Leiterkarte 110 gegenübersteht, eine Elektrode 12, die konzentrisch zur Drehachse A als Leiterbahn ringförmig angeordnet ist. Man erkennt diese Elektrode 12 in Fig. 1 im Schnitt und in Fig. 2 in der Draufsicht.

Nicht gezeigt ist, dass derjenige Leiterkartenbereich der Leiterkarte 10, auf dem die Elektrode 12 aufgebracht ist, und der Leiterkartenbereich 10', auf dem die Spule 14 aufgebracht ist, durch entsprechende radiale Stege miteinander verbunden sind. Bei der beschriebenen Ausführungsform bilden also der Spulenträgerbereich 10' und der Elektrodenträger mit der Elektrode 12 eine einstückige Leiterkarte 10.

Die Leiterkarte 10 ist über einen oder mehrere isolierende Abstandshalter 16 (Fig. 1) mit einer metallischen Gehäuseschale 22 verbunden, die zum Beispiel ein Tiefziehblech umfassen kann. Bei der beschriebenen Ausführungsform ist diese Gehäuseschale 22 mit der Antriebswelle 52 eines Antriebsmotors 50 drehfest verbunden, so dass sich die Gehäuseschale 22 zusammen mit der Leiterkarte 10 und den darauf aufgebrachten Strukturen dreht.

Die Antriebswelle 52 ist drehfest mit einem (nicht gezeigten) ersten Gegenstand gekoppelt, sodass auch die Gehäuseschale 22 und die Leiterkarte 10 drehfest mit dem ersten Gegenstand sind. In entsprechender Weise ist ein Gehäuse des Antriebsmotors 50 drehfest mit einem (ebenfalls nicht gezeigten) zweiten Gegenstand verbunden. Der zweite Gegenstand ist folglich drehfest mit der Leiterkarte 110 gekoppelt.

In bzw. an der Leiterkarte 10 ist - bezüglich der Elektrode 12 radial nach innen versetzt - eine Abschirmungsstruktur 18, 20 vorgesehen, die bei der beschriebenen Ausführungsform wie folgt ausgestaltet ist:
In der Leiterkarte 10 befinden sich radial gegenüber der Elektrode 12 nach innen versetzt auf einem Ring angeordnete Bohrungen 20, deren Inneres metallisch ausgekleidet ist, z.B. durch einen entsprechenden Aufdampfprozess. Diese metallisch ausgekleideten Bohrungen 20 stehen über ein metallisches Material 18 mit der Gehäuseschale 22 in elektrischer Verbindung. Bei dem metallischen Material 18 kann es sich z.B. um leitenden Schaumstoff handeln.

Wie es in Fig. 1 sichtbar ist, weist die Gehäuseschale 22 an der radial äußeren Seite der Leiterkarte 10 einen abgewinkelten Bereich 26 auf. Insgesamt ergibt sich auf diese Weise eine Abschirmungsstruktur, die aus den metallisch ausgekleideten Bohrungen 20, der ringförmigen Materialstruktur 18, der planaren Fläche der Gehäuseschale 22 und dem abgewinkelten Bereich 26 der Gehäuseschale 22 gebildet wird.

An dem Antriebsmotor 50 ist bei der beschriebenen Ausgestaltung eine Gehäuseschale 122 fest montiert. Diese Gehäuseschale 122 trägt eine Struktur, die der beschriebenen Struktur, die in der Gehäuseschale 22 vorgesehen ist, entspricht und ihr gegenübersteht. So ist hier eine Elektrode 112 auf einem Leiterkartenbereich einer Leiterkarte 110 vorgesehen, der über einen oder mehrere isolierende Abstandshalter 116 mit der Gehäuseschale 122 verbunden ist. Eine ringförmige Struktur aus metallischem Schaumstoff 118 verbindet die Gehäuseschale 122 mit Bohrungen 120, die in der Leiterkarte 110 ringförmig angeordnet sind und metallisch ausgekleidet sind. Am radial äußersten Bereich der Gehäuseschale 122 weist diese einen abgewinkelten Bereich 126 auf.

Es ist erkennbar, dass die sich gegenüberstehenden Elektroden 12 bzw. 112 auf den sich gegenüberstehenden Leiterplatten 10 bzw. 110 effektiv durch die Abschirmungsstruktur abgeschirmt sind, die durch die Gehäuseschalen 22, 122, deren abgewinkelten Bereichen 26, 126, den Strukturen aus metallischem Schaumstoff 18, 118 und den metallisch ausgekleideten ringförmig angeordneten Bohrungen 20, 120 gebildet wird. Besonders effektiv ist die Abschirmung nach außen, wenn sich wie bei der gezeigten Ausführungsform die abgewinkelten Bereiche 26, 126 der beiden Gehäuseschalen 22, 122 überlappen.

Die Gehäuseschalen 22, 122 und insbesondere die abgewinkelten Bereiche 26, 126 bilden außerdem noch eine wirksame kapazitive Kopplung der Masse zwischen den sich relativ zueinander drehenden Elementen.

Radial innerhalb der Struktur mit den Elektroden 12 sind die bereits beschriebenen lithographisch hergestellten Spulenwindungen 14 auf dem Leiterkartenbereich 10' vorgesehen. Diesen Spulenwindungen 14 stehen auf der in Fig. 1 unteren Leiterkarte 110 in deren Bereich 110' Spulenwindungen 114 gegenüber, die genauso wie die Spulenwindungen 14 auf der jeweilige Leiterkarte lithographisch hergestellt sind. Für die Spule auf der Leiterkarte 110 und die sie bildenden Spulenwindungen wird der einfachen Darstellung halber im vorliegenden Text dieselbe Bezugsziffer 114 verwendet.

Der Leiterkartenbereich 10' wird von einer Ferritstruktur 24 umgeben. Man sieht, dass diese Struktur abgewinkelte Bereiche 30, 32 aufweist, die die Leiterplatte 10' durchsetzen. Dabei weist der äußere abgewinkelte Abschnitt 32 nur an den Bereichen Ausschnitte auf, durch die die Stegbereiche der Leiterkarte 10 hindurchgreifen, die den Leiterkartenbereich 10' mit der übrigen Leiterkarte verbinden.

Die Ferritstruktur 24 wirkt auf diese Weise besonders wirksam mit einer Ferritstruktur 124 an der anderen Leiterkarte 110 zusammen. Die zweite Ferritstruktur 124 umschließt dabei den Leiterkartenbereich 110' der zweiten Leiterkarte 110 in der gleichen Weise, wie die Ferritstruktur 24 den Leiterkartenbereich 10' der Leiterkarte 10. Auf die Weise wird die induktive Kopplung zwischen den sich gegenüberstehenden Spulen 14, 114 durch die Ferritstrukturen 24, 124 wirksam transformatorisch verstärkt. Außerdem wirken die Ferritstrukturen 24, 124 zusätzlich abschirmend in der Weise, dass die elektrische Kopplung der Elektroden 12, 112 zur Datenübertragung nicht oder weniger durch die induktive Kopplung zwischen den Spulen 14 und 114 gestört wird.

In Fig. 2 ist eine erste Ausführungsform einer ringscheibenförmigen Elektrode 12, 112, wie sie in Fig. 1 zum Einsatz kommt, in Draufsicht gezeigt. Die ringscheibenförmige Elektrode 12, 112 umfasst einen ringförmigen Bereich 54 sowie eine Vielzahl von rechteckigen Zähnen 56, die von dem ringförmigen Bereich 54 nach außen abstehen. Zwischen zwei Zähnen 56 ist jeweils eine Aussparung 58 vorgesehen, die in Umfangsrichtung gesehen eine gleiche Länge wie die Zähne 56 aufweist. In einer erfindungsgemäßen Vorrichtung stehen sich zwei derartige Elektroden 12, 112 bezüglich der Achse A axial beabstandet gegenüber, wie es in Fig 1 erkennbar ist, wobei eine der Elektroden 12 sich um die Achse A dreht, während die andere Elektrode 112 bei diesem Beispiel ruht.

Eine zweite Ausführungsform von ringscheibenförmigen Elektroden 12, 112 ist in Fig. 3 gezeigt. Die in Fig. 3 gezeigten Elektroden 12, 112 weisen Aussparungen 58 auf, die in Umfangsrichtung gesehen jeweils doppelt so lang wie die Zähne 56 sind. Dies bedeutet, dass eine Aussparung 58 ein Winkelsegment überdeckt, welches doppelt so groß ist, wie das von einem Zahn 56 überdeckte Winkelsegment.

In Fig. 3 ist bereits die Anordnung zweier sich gegenüberstehenden Elektroden 12, 112 angedeutet. Die Elektrode 12 ist in Fig. 3 der Elektrode 112 bezüglich der Rotationsachse A axial beabstandet gegenüberstehend angeordnet, wobei bei der in dem in Fig. 3 gezeigten Moment jeweils ein Zahn 56 der Elektrode 12 einer Aussparung 58 der Elektrode 112 axial gegenübersteht. Die in Fig. 3 gezeigte Darstellung zeigt damit eine Momentaufnahme minimaler elektrischer Kopplung zwischen den Elektroden 12, 112. Durch Verdrehen der Elektroden 12, 112 gegeneinander können die Zähne 56 der Elektroden 12, 112 axial zur Deckung gebracht werden, wodurch die elektrische Kopplung zwischen den Elektroden 12, 112 ihren Maximalwert erreicht. Durch weiteres Drehen gegeneinander nähert sich die elektrische Kopplung wieder dem Minimalwert an.

Durch die derartige Veränderung der elektrischen Kopplung der auf den Leiterplatten 10, 110 angebrachten Elektroden 12, 112 verändert sich auch die empfangene Amplitude eines übertragenen Signals, wie dies in Fig. 4 gezeigt ist.

Im Betrieb der Vorrichtung wird von einer (nicht gezeigten) Steuereinheit, welche an dem ersten Gegenstand angeordnet ist, ein eine erste und eine zweite Frequenz umfassendes Signal erzeugt und in die Elektrode 12 eingeprägt. Die erste Frequenz liegt bei 75 MHz und wird mit einer konstanten Amplitude erzeugt. Die zweite Frequenz liegt bei 300 MHz und weist eine Amplitudenmodulation auf. Mittels der zweiten Frequenz werden Nutzdaten übermittelt, beispielsweise Messwerte eines Sensorkopfes eines Laserscanners. Der Sensorkopf und damit die Steuereinheit werden von dem zweiten Gegenstand aus mittels der Spulen 14, 114 mit elektrischer Energie versorgt. Grundsätzlich ist es natürlich auch möglich, dass sich eine entsprechende Steuereinheit am zweiten Gegenstand befindet um ein entsprechendes Signal der Elektrode 112 einzuprägen.

Das Signal wird mittels der elektrischen Kopplung zwischen den Elektroden 12, 112 an die Elektrode 112 übertragen. Die Elektrode 112 ist elektrisch mit einer (nicht gezeigten) Auswerteeinheit gekoppelt. Die Auswerteeinheit wertet das Signal aus, um die Nutzdaten aus dem Signal zu gewinnen. Zudem ermittelt die Auswerteeinheit die empfangene Amplitude der ersten Frequenz, welche sich aufgrund der schwankenden Kopplung bei einer Drehung der Gegenstände über die Zeit verändert. Anhand der empfangenen Amplitude und der bekannten Geometrie der Elektroden 12, 112 ermittelt die Auswerteeinheit eine Winkeländerung zwischen dem ersten und dem zweiten Gegenstand.

Fig. 4 zeigt einen ersten Signalverlauf 60 der Amplitude der ersten Frequenz des empfangenen Signals (in Dezibel) für eine Drehung einer Leiterplatte 10, 110 um 360°. Es ist zu erkennen, dass die Signalstärke in etwa sinusförmig zwischen lokalen Maxima und Minima schwankt, was durch die vorstehend beschriebene schwankende elektrische Kopplung während der Rotation der Elektroden 12, 112 verursacht wird. Genauer gesagt entsteht ein lokales Maximum, wenn zwei Zähne 56 der Elektroden 12, 112 sich in Richtung der Rotationsachse A axial überdecken. Ein lokales Minimum zeigt an, dass axial gesehen ein Zahn 56 der einen Elektrode 12, 112 einer Aussparung 58 der anderen Elektrode 12, 112 gegenüberliegt.

Erkennt die Auswerteeinheit, dass beispielsweise nach einem ersten lokalen Maximum ein zweites lokales Maximum auftritt, so kann gefolgert werden, dass sich die Elektroden 12, 112 um den Winkel zwischen zwei Zähnen 56 gedreht haben. Die Auswerteeinheit kann dann eine entsprechende Winkeländerung z.B. mittels eines Datensignals ausgeben.

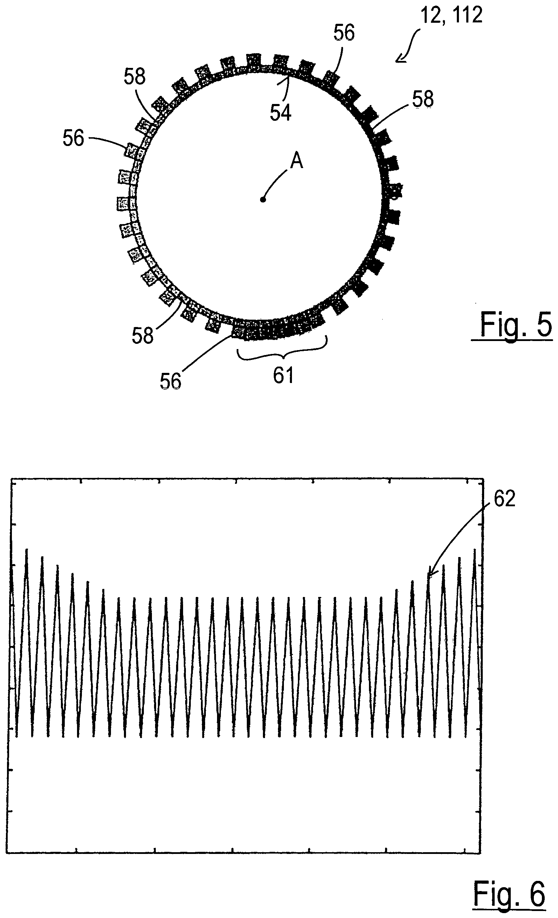

Zur Erweiterung der Funktionalität der Winkelerfassung kann an jeder der Elektroden 12, 112 jeweils ein Nullreferenzabschnitt vorgesehen werden. Eine solche dritte Ausführungsform einer ringscheibenförmigen Elektrode 12, 112 ist in Fig. 5 gezeigt. Aus Fig. 5 ist ersichtlich, dass ein Nullreferenzabschnitt 61 von sieben direkt nebeneinander angeordneten Zähnen 56 gebildet wird. Alternativ kann der Nullreferenzabschnitt 61 aber auch z.B. aus fünf oder fünfzehn direkt nebeneinander angeordneten Zähnen 56 oder Aussparungen 58 bestehen.

Wird ein solcher Nullreferenzabschnitt 61 an beiden Elektroden 12, 112 vorgesehen, so wird die in Fig. 4 gezeigte Amplitudenmodulation des empfangenen Signals von einer zusätzlichen Amplitudenmodulation überlagert. Die zusätzliche Amplitudenmodulation erreicht ihr Maximum, wenn die beiden Nullreferenzabschnitte axial zur Deckung gelangen.

Fig. 6 zeigt einen zweiten Signalverlauf 62 der Amplitude der ersten Frequenz des empfangenen Signals über eine komplette Drehung der Elektroden 12, 112 für eine Ausführungsform der Elektroden 12, 112 mit Nullreferenzabschnitt 61. Die den Signalverlauf 62 erzeugenden Elektroden 12, 112 umfassen jeweils zusammengenommen 64 Zähne 56 und Aussparungen 58, d.h. jede Elektrode 12, 112 weist 64 gleich lange Abschnitte (sogenannte "chips") auf. Der Nullreferenzabschnitt 61 wird jeweils durch 15 direkt nebeneinander liegende Zähne 56 gebildet.

Es ist zu erkennen, dass die lokalen Maxima und Minima von einem globalen Maximum überlagert werden. Die Signalstärke ist bei 0° (d.h. am Nullpunkt) maximal, was durch die dortige axiale Deckungsgleichheit der Nullreferenzabschnitte 61 hervorgerufen wird. Durch die Nullreferenzabschnitte 61 kann somit eine absolute Winkelstellung der Leiterplatten 10, 110 relativ zueinander ermittelt werden.

### Bezugszeichenliste

- 10, 110: Leiterplatte
- 10', 110': radial innerer Bereich der Leiterplatte
- 12, 112: ringförmige Elektrode
- 14, 114: Spule, Spulenwindungen
- 16, 116: isolierender Abstandshalter
- 18, 118: ringförmige metallische Schaumstoffstruktur
- 20, 120: ringförmig angeordnete metallisch ausgekleidete Bohrungen
- 22, 122: Gehäuseschale
- 24, 124: Ferritstruktur
- 26, 126: abgewinkelter Bereich der Gehäuseschale
- 30, 130: radial innerer abgewinkelter Bereich der Ferritstruktur
- 32, 132: radial äußerer abgewinkelter Abschnitt der Ferritstruktur
- 50: Antriebsmotor
- 52: Antriebswelle
- 54: ringförmiger Bereich
- 56: Zahn
- 58: Aussparung
- 60: erster Signalverlauf
- 61: Nullreferenzabschnitt
- 62: zweiter Signalverlauf
- A: Achse der relativen Rotationsbewegung

## Patentansprüche

1. Vorrichtung zur kontaktlosen Übertragung von Daten und zur Ermittlung einer Winkeländerung zwischen zwei sich um eine gemeinsame Rotationsachse (A) relativ zueinander bewegenden Gegenständen, wobei
- an dem ersten Gegenstand ein bevorzugt scheiben- oder ringscheibenförmiger Elektrodenträger (10) vorgesehen ist, der eine erste Elektrode (12) umfasst,
- an dem zweiten Gegenstand ein bevorzugt scheiben- oder ringscheibenförmiger Elektrodenträger (110) vorgesehen ist, der eine zweite Elektrode (112) umfasst, wobei sich der erste und der zweite Elektrodenträger (10, 110) bezüglich der Rotationsachse (A) axial beabstandet gegenüberstehen und die erste und die zweite Elektrode (12, 112) derart angeordnet sind, dass eine Datenübertragung durch elektrische Kopplung zwischen der ersten und der zweiten Elektrode (12, 112) möglich ist, wobei die Elektrodenträger (10, 110) derart ausgebildet sind, dass sich die Stärke der elektrischen Kopplung entlang der umfangsmäßigen Erstreckung der ersten und der zweiten Elektrode (12, 112) verändert,
wobei eine Steuereinheit vorgesehen ist, die ausgebildet ist, ein Signal von der ersten Elektrode (12) an die zweite Elektrode (112) zu übertragen, welches Nutzdaten enthält, und eine Auswerteeinheit vorgesehen ist, die ausgebildet ist, die Nutzdaten zu empfangen und eine Signalstärke des empfangenen Signals auszuwerten, um eine Winkeländerung zwischen dem ersten und dem zweiten Gegenstand zu ermitteln.

2. Vorrichtung nach Anspruch 1,
**dadurch gekennzeichnet, dass**
der erste Elektrodenträger (10) in Umfangsrichtung abwechselnde Abschnitte mit verbreiterter und anschließend verjüngter erster Elektrode (12) aufweist und der zweite Elektrodenträger (110) in Umfangsrichtung abwechselnde Abschnitte (56, 58) mit verbreiterter und anschließend verjüngter zweiter Elektrode (112) aufweist.

3. Vorrichtung nach Anspruch 2,
**dadurch gekennzeichnet, dass**
die Abschnitte mit verbreiterter Elektrode (56) und mit verjüngter Elektrode (58) in Umfangsrichtung der Elektrodenträger (10, 110) jeweils eine gleiche Länge aufweisen.

4. Vorrichtung nach Anspruch 2 oder 3,
**dadurch gekennzeichnet, dass**
der erste und der zweite Elektrodenträger (10, 110) jeweils einen Nullreferenzabschnitt aufweisen, der eine verbreiterte oder eine verjüngte Elektrode (12, 112) aufweist und dessen Länge in Umfangsrichtung größer als die Länge eines Abschnitts mit verbreiterter Elektrode (56) und die Länge eines Abschnitts mit verjüngter Elektrode (58) ist.

5. Vorrichtung nach zumindest einem der vorstehenden Ansprüche,
**dadurch gekennzeichnet, dass**
die Steuereinheit ausgebildet ist, das Signal in einer Weise zu erzeugen, dass es eine erste Frequenz und eine zweite Frequenz umfasst, wobei die Steuereinheit eingerichtet ist, die Nutzdaten mittels der zweiten Frequenz zu übertragen.

6. Vorrichtung nach Anspruch 5,
**dadurch gekennzeichnet, dass**
die erste Frequenz keine Amplitudenmodulation aufweist und/oder die zweite Frequenz amplitudenmoduliert ist.

7. Vorrichtung nach Anspruch 5 oder 6,
**dadurch gekennzeichnet, dass**
die erste Frequenz kleiner als die zweite Frequenz ist, wobei die erste Frequenz bevorzugt kleiner oder gleich 75 MHz und die zweite Frequenz bevorzugt größer oder gleich 300 MHz ist.

8. Vorrichtung nach zumindest einem der vorstehenden Ansprüche,
**dadurch gekennzeichnet, dass**
- koaxial und drehfest zu dem ersten Elektrodenträger (10) eine erste Spule (14) vorgesehen ist,
- koaxial und drehfest zu dem zweiten Elektrodenträger (110) eine zweite Spule (114) vorgesehen ist, die der ersten Spule (14) derart bezüglich der Rotationsachse (A) axial beabstandet gegenübersteht, dass eine Energieübertragung durch induktive Kopplung zwischen den zwei Spulen (14, 114) möglich ist.

9. Vorrichtung nach Anspruch 8,
**dadurch gekennzeichnet, dass**
in einem radialen Bereich zwischen der ersten Spule (14) und der ersten Elektrode (12) und/oder zwischen der zweiten Spule (114) und der zweiten Elektrode (112) jeweils koaxial zwischen Spule (14, 114) und Elektrode (12, 112) eine Anordnung aus leitfähigem Material (18, 20; 118, 120) zur elektrischen Abschirmung vorgesehen ist.

10. Verfahren zur kontaktlosen Übertragung von Daten und zur Ermittlung einer Winkeländerung zwischen zwei sich um eine gemeinsame Rotationsachse (A) relativ zueinander bewegenden Gegenständen, wobei
- an dem ersten Gegenstand ein bevorzugt scheiben- oder ringscheibenförmiger Elektrodenträger (10) vorgesehen ist, der eine erste Elektrode (12) umfasst,
- an dem zweiten Gegenstand ein bevorzugt scheiben- oder ringscheibenförmiger Elektrodenträger (110) vorgesehen ist, der eine zweite Elektrode (112) umfasst, wobei sich der erste und der zweite Elektrodenträger (10, 110) bezüglich der Rotationsachse (A) axial beabstandet gegenüberstehen und die erste und die zweite Elektrode (12, 112) derart angeordnet sind, dass eine Datenübertragung durch elektrische Kopplung zwischen der ersten und der zweiten Elektrode (12, 112) möglich ist, wobei die Elektrodenträger (10, 110) derart ausgebildet sind, dass die Stärke der elektrischen Kopplung entlang der Erstreckung der ersten und der zweiten Elektrode (12, 112) schwankt,
wobei bei dem Verfahren
- von der ersten Elektrode (12) an die zweite Elektrode (112) ein Signal übertragen wird, welches Nutzdaten enthält, und
- eine Signalstärke des empfangenen Signals ausgewertet wird, um eine Winkeländerung zwischen dem ersten und dem zweiten Gegenstand zu ermitteln.

11. Laserscanner mit einer Vorrichtung zur kontaktlosen Übertragung von Daten und zur Ermittlung einer Winkeländerung nach einem der Ansprüche 1 bis 9, wobei der Laserscanner einen, relativ um eine Rotationsachse drehbaren, den ersten Gegenstand bildenden Sensorkopf und eine den zweiten Gegenstand bildende Versorgungseinheit umfasst.

## Claims

1. An apparatus for the contactless transmission of data and for the determination of an angle change between two objects moving relative to one another about a common axis of rotation (A), wherein
- an electrode carrier (10) preferably of disk shape or annular disk shape is provided at the first object and comprises a first electrode (12);
- an electrode carrier (110) preferably of disk shape or annular disk shape is provided at the second object and comprises a second electrode (112), with the first and second electrode carriers (10, 110) being disposed opposite and axially spaced apart with respect to the axis of rotation (A) and the first and second electrodes (12, 112) being arranged such that a data transmission is possible between the first and second electrodes (12, 112) by electrical coupling, and with the electrode carriers (10, 110) being configured such that the strength of the electrical coupling varies along the peripheral extent of the first and second electrodes (12, 112); and wherein a control unit is provided which is configured to transmit a signal from the first electrode (12) to the second electrode (112), said signal including use data, and an evaluation unit is provided which is configured to receive the use data and to evaluate a signal strength of the received signal to determine an angle change between the first and second objects.

2. An apparatus in accordance with claim 1,
**characterized in that**
the first electrode carrier (10) has alternating sections in the peripheral direction with a widened and subsequently reduced first electrode (12); and **in that** the second electrode carrier (110) has alternating sections (56, 58) in the peripheral direction with a widened and subsequently reduced second electrode (112).

3. An apparatus in accordance with claim 2,
**characterized in that**
the sections having a widened electrode (56) and having a reduced electrode (58) respectively have the same length in the peripheral direction of the electrode carriers (10, 110).

4. An apparatus in accordance with claim 2 or claim 3,
**characterized in that**
the first and second electrode carriers (10, 110) each have a zero reference section which has a widened electrode or a reduced electrode (12, 112) and whose length in the peripheral direction is larger than the length of a section having a widened electrode (56) and the length of a section having a reduced electrode (58).

5. An apparatus in accordance with at least one of the preceding claims,
**characterized in that**
the control unit is configured to generate the signal in such a manner that said signal comprises a first frequency and a second frequency, with the control unit being adapted to transmit the use data by means of the second frequency.

6. An apparatus in accordance with claim 5,
**characterized in that**
the first frequency does not have any amplitude modulation; and/or **in that** the second frequency is amplitude-modulated.

7. An apparatus in accordance with claim 5 or claim 6,
**characterized in that**
the first frequency is smaller than the second frequency, with the first frequency preferably being smaller than or equal to 75 MHz and the second frequency preferably being larger than or equal to 300 MHz.

8. An apparatus in accordance with at least one of the preceding claims,
**characterized in that**
- a first coil (14) is provided coaxially to and rotationally fixed with respect to the first electrode carrier (10);
- a second (114) coil is provided coaxially to and rotationally fixed with respect to the second electrode carrier (110) and is disposed opposite and axially spaced apart from the first coil (14) with respect to the axis of rotation (A) such that an energy transmission is possible between the two coils (14, 114) by inductive coupling.

9. An apparatus in accordance with claim 8,
**characterized in that**
an arrangement of conductive material (18, 20; 118, 120) for electrical shielding is provided in a radial region between the first coil (14) and the first electrode (12) and/or between the second coil (114) and the second electrode (112), in each case coaxially between the coil (14, 114) and the electrode (12, 112).

10. A method for the contactless transmission of data and for the determination of an angle change between two objects moving relative to one another about a common axis of rotation (A), wherein
- an electrode carrier (10) preferably of disk shape or annular disk shape is provided at the first object and comprises a first electrode (12);
- an electrode carrier (110) preferably of disk shape or annular disk shape is provided at the second object and comprises a second electrode (112), with the first and second electrode carriers (10, 110) being disposed opposite and axially spaced apart with respect to the axis of rotation (A) and the first and second electrodes (12, 112) being arranged such that a data transmission is possible between the first and second electrodes (12, 112) by electrical coupling, and with the electrode carriers (10, 110) being configured such that the strength of the electrical coupling fluctuates along the extent of the first and second electrodes (12, 112); and
wherein in the method
- a signal which includes use data is transmitted from the first electrode (12) to the second electrode (112); and
- a signal strength of the received signal is evaluated to determine an angle change between the first and second objects.

11. A laser scanner having an apparatus for the contactless transmission of data and for the determination of an angle change in accordance with any one of the claims 1 to 9, wherein the laser scanner comprises a sensor head relatively rotatable about an axis of rotation and forming the first object; and a supply unit forming the second object.

## Revendications

1. Dispositif pour la transmission sans contact de données et pour la détermination d'une variation angulaire entre deux objets se déplaçant l'un par rapport à l'autre autour d'un axe de rotation (A) commun, dans lequel
- un porte-électrode (10), de préférence en forme de disque ou de disque annulaire, qui comprend une première électrode (12), est prévu sur le premier objet,
- un porte-électrode (110), de préférence en forme de disque ou de disque annulaire, qui comprend une deuxième électrode (112), est prévu sur le deuxième objet, le premier et le deuxième porte-électrode (10, 110) se faisant face à une certaine distance axiale par rapport à l'axe de rotation (A) et la première et la deuxième électrode (12, 112) étant disposées de telle sorte qu'une transmission de données par couplage électrique entre la première et la deuxième électrode (12, 112) soit possible, les porte-électrodes (10, 110) étant conçus de telle sorte que l'intensité du couplage électrique varie le long de l'étendue circonférentielle de la première et de la deuxième électrode (12, 112),
dans lequel une unité de commande est prévue, qui est conçue pour transmettre un signal de la première électrode (12) à la deuxième électrode (112), lequel contient des données utiles, et une unité d'évaluation est prévue, qui est conçue pour recevoir les données utiles et évaluer une intensité de signal du signal reçu pour déterminer une variation angulaire entre le premier et le deuxième objet.

2. Dispositif selon la revendication 1, **caractérisé en ce que** le premier porte-électrode (10) présente, dans la direction circonférentielle, des sections alternées avec première électrode (12) élargie et ensuite amincie et le deuxième porte-électrode (110) présente, dans la direction circonférentielle, des sections alternées (56, 58) avec deuxième électrode (112) élargie et ensuite amincie.

3. Dispositif selon la revendication 2, **caractérisé en ce que** les sections avec électrode élargie (56) et avec électrode amincie (58) présentent chacune une même longueur dans la direction circonférentielle des porte-électrodes (10, 110).

4. Dispositif selon la revendication 2 ou 3, **caractérisé en ce que** le premier et le deuxième porte-électrode (10, 110) présentent chacun une section de référence zéro qui présente une électrode (12, 112) élargie ou amincie et dont la longueur dans la direction circonférentielle est plus grande que la longueur d'une section avec électrode élargie (56) et la longueur d'une section avec électrode amincie (58).

5. Dispositif selon au moins l'une des revendications précédentes, **caractérisé en ce que** l'unité de commande est conçue pour produire le signal de façon qu'il comprenne une première fréquence et une deuxième fréquence, l'unité de commande étant configurée pour transmettre les données utiles au moyen de la deuxième fréquence.

6. Dispositif selon la revendication 5, **caractérisé en ce que** la première fréquence ne présente pas de modulation d'amplitude et/ou que la deuxième fréquence est modulée en amplitude.

7. Dispositif selon la revendication 5 ou 6, **caractérisé en ce que** la première fréquence est plus petite que la deuxième fréquence, la première fréquence étant de préférence inférieure ou égale à 75 MHz et la deuxième fréquence de préférence supérieure ou égale à 300 MHz.

8. Dispositif selon au moins l'une des revendications précédentes, **caractérisé en ce**
- **qu'**une première bobine (14), coaxiale et solidaire en rotation du premier porte-électrode (10), est prévue,
- **qu'**une deuxième bobine (114), coaxiale et solidaire en rotation du deuxième porte-électrode (110), est prévue, qui fait face à la première bobine (14) à une certaine distance axiale par rapport à l'axe de rotation (A) de telle sorte qu'une transmission d'énergie par couplage inductif entre les deux bobines (14, 114) soit possible.

9. Dispositif selon la revendication 8, **caractérisé en ce qu'**un agencement en matériau conducteur (18, 20 ; 118, 120) est prévu dans une zone radiale entre la première bobine (14) et la première électrode (12) et/ou entre la deuxième bobine (114) et la deuxième électrode (112), chaque fois coaxialement entre la bobine (14, 114) et l'électrode (12, 112), pour le blindage électrique.

10. Procédé pour la transmission sans contact de données et pour la détermination d'une variation angulaire entre deux objets se déplaçant l'un par rapport à l'autre autour d'un axe de rotation (A) commun, dans lequel
- un porte-électrode (10), de préférence en forme de disque ou de disque annulaire, qui comprend une première électrode (12), est prévu sur le premier objet,
- un porte-électrode (110), de préférence en forme de disque ou de disque annulaire, qui comprend une deuxième électrode (112), est prévu sur le deuxième objet, le premier et le deuxième porte-électrode (10, 110) se faisant face à une certaine distance axiale par rapport à l'axe de rotation (A) et la première et la deuxième électrode (12, 112) étant disposées de telle sorte qu'une transmission de données par couplage électrique entre la première et la deuxième électrode (12, 112) soit possible, les porte-électrodes (10, 110) étant conçus de telle sorte que l'intensité du couplage électrique fluctue le long de l'étendue de la première et de la deuxième électrode (12, 112),
selon lequel procédé
- un signal est transmis de la première électrode (12) à la deuxième électrode (112), lequel contient des données utiles, et
- une intensité de signal du signal reçu est évaluée pour déterminer une variation angulaire entre le premier et le deuxième objet.

11. Scanner laser comprenant un dispositif pour la transmission sans contact de données et pour la détermination d'une variation angulaire selon l'une des revendications 1 à 9, lequel scanner laser comprend une tête de capteur pouvant tourner relativement autour d'un axe de rotation, formant le premier objet, et une unité d'alimentation formant le deuxième objet.
